Europäisches Patentamt

European Patent Office

Office européen des brevets

(11) Veröffentlichungsnummer: **0 388 777**
**A2**

## (12) EUROPÄISCHE PATENTANMELDUNG

(21) Anmeldenummer: **90104845.4**

(51) Int. Cl.5: **G01K 13/02**

(22) Anmeldetag: **14.03.90**

(30) Priorität: **17.03.89 DE 8903370 U**

(43) Veröffentlichungstag der Anmeldung:
**26.09.90 Patentblatt 90/39**

(84) Benannte Vertragsstaaten:
**DE FR GB IT**

(71) Anmelder: **Siemens Aktiengesellschaft**
**Wittelsbacherplatz 2**
**D-8000 München 2(DE)**

(72) Erfinder: **Wildgen, Andreas, Dr.**
**Am Grund 7**
**D-8419 Nittendorf/Haugenried(DE)**
Erfinder: **Molin, Marek**
**Riesengebirgsstrasse 19**
**D-8402 Neutrabling(DE)**

(54) **Sensorteil zum Erfassen der Temperatur von strömenden Gasen.**

(57) Die Erfindung betrifft ein Sensorteil zum Erfassen der Temperatur von strömenden Gasen. Der plattenförmige Träger (11) des dabei verwendeten Chips (1) ist aus Glas gefertigt. Durch die Verwendung von Glas kann eine Halterung (2) für den Chip (1) besonders einfach und kostengünstig aufgebaut werden.

FIG 1

EP 0 388 777 A2

## Sensorteil zum Erfassen der Temperatur von strömenden Gasen

Die Erfindung betrifft ein Sensorteil bestehend aus einem Chip und einer Halterung zum Erfassen der Temperatur von strömenden Gasen in einem Kanal gemäß Oberbegriff von Schutzanspruch 1.

Der Chip besteht aus einem plattenförmigen Trägermaterial, auf dem eine temperaturabhängige elektrische Meßschicht aufgebracht ist. Diese elektrische Meßschicht kann eine Widerstandsbahn, einen Transistor oder eine Diode etc. bilden.

Als Trägermaterial werden normalerweise Werkstoffe verwendet, die eine gute Wärmeleitfähigkeit und eine geringe Wärmekapazität haben. Dadurch ergibt sich ein schnelles Ansprechverhalten bei rascher Temperaturänderung. Solche Materialien sind z.B. verschiedene Keramiken, wie $AL_2O_3$ oder Silizium.

Dieses gute Ansprechverhalten verschlechtert sich jedoch durch die Halterung des Chips, da durch die gute Wärmeleitfähigkeit des Trägers Wärme über die Halterung zufließen kann. Aus diesem Grund wurde die Halterung so gestaltet, daß ihre Berührungsflächen mit dem Träger möglichst gering sind, z.B. Spitzenlagerung. Eine solche Halterung ist dementsprechend kompliziert und teuer.

Der vorliegenden Erfindung liegt die Aufgabe zugrunde, ein Sensorteil so auszuführen daß eine sehr einfache Halterung verwendet werden kann und trotzdem ein gutes Ansprechverhalten bei Temperaturveränderungen gegeben ist.

Die Lösung gemäß der Erfindung ist im Schutzanspruch 1 gekennzeichnet. Vorteilhafte Weiterbildungen der Erfindung sind in den Unteransprüchen gekennzeichnet.

Gemäß der Erfindung wird als Trägermaterial für den Chip Glas verwendet. Die negativen Einflüße der Halterung sind damit beseitigt, da durch die schlechte Wärmeleitfähigkeit von Glas kaum noch Wärme über die Halterung fließt.

Die Notwendigkeit bei der Konstruktion der Halterung speziell auf die Wärmeübergänge zum Chip zu achten, entfällt also. Sie kann daher besonders einfach und kostengünstig ausgelegt werden. Die Erfindung kann vorteilhaft in Verbindung mit einem Heißfilmluftmassenmesser eingesetzt werden. Dabei werden die Träger für den Chip zur Temperaturkompensation gemäß der Neuerung und auch der des Heißfilmchips aus Glas gefertigt. So kann für beide Chips eine besonders einfache und kostengünstig aufgebaute Halterung verwendet werden, die in idealer Weise auf die Bedürfnisse eines Heissfilmluftmassenmessers zugeschnitten ist.

Es bestand bisher die Meinung, daß man Glas als Trägermaterial nicht verwenden sollte, da es eine hohe Wärmekapazität hat und damit die Ansprechgeschwindigkeit des Chips verschlechtert. Dies ist jedoch nicht der Fall, wenn man das Volumen des Glases so gering wie möglich hält, sodaß gerade noch die mechanische Festigkeit gewährleistet ist.

Die Erfindung wird anhand eines Ausführungsbeispiels näher erläutert. Dabei zeigen

Figur 1 den Aufbau eines Chips zur Erfassung der Temperatur,

Figur 2 eine Ansicht einer Halterung von Chips eines Heissfilmluftmassenmessers,

Figur 3 eine Ansicht entlang der Linie III - III aus Figur 2 und Figur 4 einen Schnitt entlang der Linie IV - IV aus Figur 2.

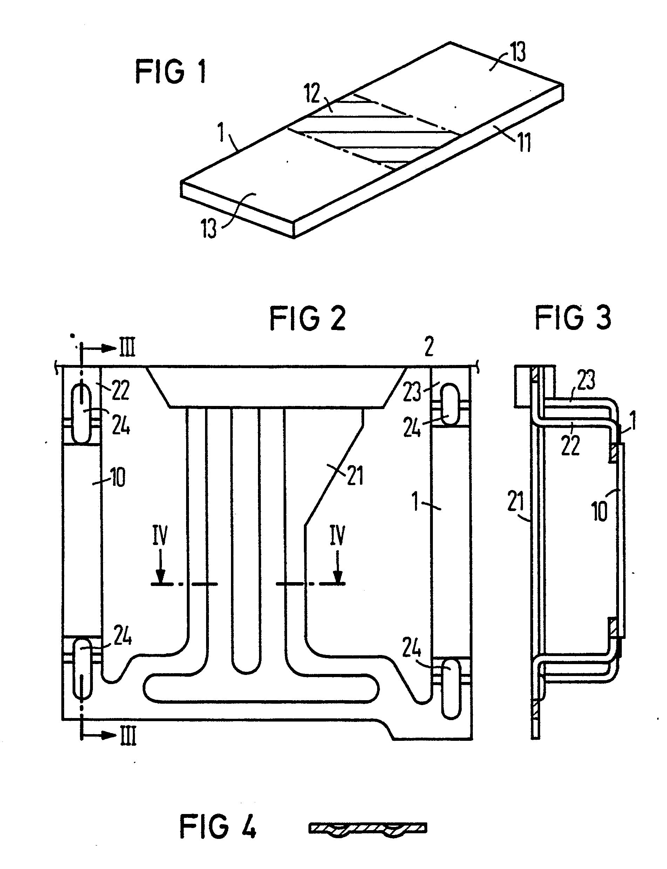

Die Figur 1 zeigt einen Chip 1 mit einem Träger 11 aus Glas, einer darauf aufgebrachten temperaturabhängigen Widerstandsschicht 12, die über aufgesputterte Platinschichten 13 zu den Seiten hin kontaktiert ist.

Dieser Chip 1 dient zum Erfassen der Temperatur. Er hat eine Länge von 12 mm, eine Breite von 2 mm, und eine Dicke von 0,15 mm. Den Abmessungen des Chips 1 kommt eine besondere Bedeutung zu, da bei der Verwendung von Glas als Trägermaterial das Volumen möglichst klein gehalten werden sollte. Die genannten Abmessungen stellen die derzeit gefundene günstigste Ausführung dar. Es sind natürlich jedoch auch andere Abmessungen denkbar.

Die zur Kontaktierung der Widerstandsschicht 12 aufgebrachten Platinschichten 13 sind nach ihrer Dicke und Fläche so ausgelegt, daß sie ungefähr die gleiche geringe Wärmeleitfähigkeit wie der Glasträger haben. Damit ist auch der Wärmefluß über die elektrische Kontaktierung dementsprechend gering.

In Figur 2 ist der Chip 1 und ein weiterer Heißfilmchip 10 in eine Halterung 2 eingesetzt. Das Trägermaterial des Heißfilmchips 10 ist ebenfalls Glas. Diese Sensoranordnung ist im Ansaugrohr einer Brennkraftmaschine angeordnet, wobei der Heißfilmchip 10 die Menge der durchströmenden Luft erfaßt und der Chip 1 zur Temperaturkompensation dient.

Die obere Begrenzungslinie in der Figur 2 bildet dabei den Rand des Ansaugrohrs. Das Ansaugrohr selbst sowie die sonstigen umgebenden Teile des Heißfilmluftmassenmessers sind in der Figur 2 nicht dargestellt. Die Figur 2 zeigt diese Sensoranordnung senkrecht zu der mit einem Pfeil eingezeichneten Strömungsrichtung der angesaugten Luft.

Die Halterung 2 ist nur an einer Seite der Wandung des Ansaugrohrs befestigt. Sie bildet zugleich die elektrische und mechanische Verbindung der Chips 1 und 10 mit dem Ansaugrohr und mit den sonstigen Teilen des Luftmassenmessers. Wie in Figur 2 gezeigt geht ein breiter Mittelsteg 21 der Halterung 2 in zwei Seitenstege 22, 23 über. In die Seitenstege sind der Heißfilmchip 10 und der Chip 1 eingesetzt. Sie sind an ihren Enden mit den Seitenstegen 22, 23 verlötet. Diese Lötstellen bilden zugleich die elektrische und mechanische Verbindung.

Wie Figur 3 zeigt sind die Seitenstege 22, 23 so ausgeführt, daß die Chips 1 und 10 nicht in der gleichen Ebene liegen wie der Mittelsteg 21. Dies hat den Vorteil, daß der Heißfilmchip 10, der in Strömungsrichtung gesehen hinter dem Mittelsteg 21 liegt, freier angeströmt werden kann. In diesem Ausführungsbeispiel liegen der Chip 1 und der Heißfilmchip 10 in der gleichen Ebene. Es ist jedoch auch möglich auch diesen Chip 1 noch in eine andere Ebene zu legen, sodaß der Heißfilmchip 10 völlig frei angeströmt wird.

Die Halterung 2 ist aus einem Blechprägeteil hergestellt, das entsprechend den Darstellungen der Figuren 2 und 3 geformt wird. An den Verbindungsstellen der Seitenstege 22, 23 mit den Chips 1 und 10 sind noch Enlastungsbohrungen 24 vorgesehen, um die bei termischen Ausdehnungen der Chips 1 und 10 entstehenden Spannungsbelastungen zu vermindern.

Die Figur 4 zeigt schließlich einen Schnitt durch den Mittelsteg 21 aus Figur 2 entlang der Linie IV - IV. Die in der Figur 4 erkennbaren Ausformungen verlaufen auf dem Mittelsteg 21 wie in Figur 2 eingezeichnet. Durch sie wird die Schwingungsfestigkeit der Halterung (2) verbessert.

Bezugszeichenliste

   1 Chip
   10 Heißfilmchip
   11 Träger
   12 Widerstandsschicht
   13 Platinschicht
   2 Halterung
   21 Mittelsteg
   22, 23 Seitensteg
   24 Entlastungsbohrung

**Ansprüche**

1. Sensorteil bestehend aus einem Chip (1) und einer Halterung, zum Erfassen der Temperatur von strömenden Gasen in einem Kanal, wobei der Chip (1) aus einem plattenförmigen Träger (11) und einer darauf aufgebrachten temperaturabhängigen elektrischen Meßschicht besteht, **dadurch gekennzeichnet**, daß der Träger (11) aus Glas ist.

2. Sensorteil nach Anspruch 1, für einen Heißfilmluftmassenmesser, **dadurch gekennzeichnet**, daß der Träger des Heißfilmchips (10) ebenfalls aus Glas ist.

3. Sensorteil nach Anspruch 2, **dadurch gekennzeichnet**, daß die Halterung aus Metall ist und zugleich die elektrische und mechanische Verbindung darstellt.

4. Sensorteil nach Anspruch 3, **dadurch gekennzeichnet**, daß die Halterung an Anschlußbahnen der elektrischen Meßschicht angelötet ist.

5. Sensorteil nach Anspruch 3, **dadurch gekennzeichnet**, daß die Halterung ein Blechprägeteil ist.

6. Sensorteil nach Anspruch 3, **dadurch gekennzeichnet**, daß die Halterung nur an einer Seite des Kanals angebracht ist und die Chips jeweils an zwei gegenüberliegenden Seiten hält und dabei der die Chips umgreifende Teil der Halterung außerhalb der in Strömungsrichtung des Gases liegenden Ebene des Heißfilmchips (10) liegt.

7. Sensorteil nach Anspruch 6, **dadurch gekennzeichnet**, daß nahe an den Verbindungsstellen der Chips (1, 10) mit der Halterung in der Halterung Entlastungsbohrungen (24) vorgesehen sind.

FIG 1

FIG 2

FIG 3

FIG 4